(19) Europäisches Patentamt
European Patent Office
Office européen des brevets

(11) **EP 1 422 502 A1**

(12) **EUROPÄISCHE PATENTANMELDUNG**

(43) Veröffentlichungstag:
26.05.2004 Patentblatt 2004/22

(51) Int Cl.⁷: **G01F 23/24**, G01F 23/26

(21) Anmeldenummer: 03026437.8

(22) Anmeldetag: 19.11.2003

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **19.11.2002 AT 17362002**

(71) Anmelder: **BIOMECHANIK UND BIOMEDIZINTECHNIK DR. MANFRED WIESER 5020 SALZBURG (AT)**

(72) Erfinder: **Wieser, Manfred, Dr.**
**5020 Salzburg (AT)**

(74) Vertreter: **Babeluk, Michael, Dipl.-Ing. Mag. Patentanwalt**
**Mariahilfer Gürtel 39/17**
**1150 Wien (AT)**

(54) **Verfahren und Vorrichtung zur Detektion einer Flüssigkeitsoberfläche**

(57) Die Erfindung betrifft ein Verfahren und eine Vorrichtung zur Detektion einer Flüssigkeitsoberfläche (5') mit einer in die Flüssigkeit (5) eintauchenden, elektrisch leitenden Sonde (4), vorzugsweise einer Pipettiernadel, wobei die Sonde (4) vom Signal eines Frequenzgenerators (1) beaufschlagt ist und mit einer elektronischen Auswerteeinheit in Kontakt steht. Erfindungsgemäß ist der Frequenzgenerator (1) an einen LC-Schwingkreis (3) hoher Güte gekoppelt und regt eine erzwungene Schwingung im Schwingkreis an. Die Sonde (4) ist mit dem LC-Schwingkreis (3) elektrisch leitend verbunden und weist zu deren Bewegung in Richtung Flüssigkeitsoberfläche (5') eine Antriebseinheit (14, 15) auf. Zur Feststellung der Phasendifferenz zwischen dem LC-Schwingkreis (3) und dem Frequenzgenerator (1) ist ein Phasendiskriminator (8) vorgesehen, welcher ein von der Phasendifferenz abhängiges Spannungssignal erzeugt, das beim Eintauchen der elektrisch leitenden Sonde (4) in die Flüssigkeit eine sprunghafte Änderung erfährt.

Fig. 1

EP 1 422 502 A1

**Beschreibung**

Die Erfindung betrifft ein Verfahren und eine Vorrichtung zur Detektion einer Flüssigkeitsoberfläche mit einer in die Flüssigkeit eintauchenden, elektrisch leitenden Sonde, vorzugsweise einer Pipettiernadel, wobei die Sonde vom Signal eines Frequenzgenerators beaufschlagt ist und mit einer elektronischen Auswerteeinheit in Kontakt steht.

Voraussetzung zur exakten Positionierung von Pipettiernadeln oder ähnlichen Vorrichtungen in Flüssigkeitsbehältern ist die genaue Erkennung der Flüssigkeitsoberfläche. Mit dem Erkennen der Flüssigkeitsoberfläche lässt sich durch einen geeigneten motorischen Antrieb die gewünschte Eintauchtiefe der Pipettiernadel mit entsprechender Genauigkeit einstellen.

Das Erreichen und Einhalten einer vorgegebenen Eintauchtiefe ist zur Verminderung bzw. Vermeidung von Kontamination oder Verschleppung unerlässlich notwendig. Die Kenntnis des Flüssigkeitslevels erlaubt zudem bei bekannter Geometrie des Behälters die Bestimmung des Flüssigkeitsvolumens bzw. des Restvolumens.

Auf dem Gebiet der "Liquid-Level-Detection" gibt es viele unterschiedliche technische Lösungen, welche sich unterschiedlicher physikalischer Messprinzipien bedienen. So existieren beispielsweise eine Reihe optischer Vorrichtungen, bei welchen ein lichtführendes Element in die Flüssigkeit eingetaucht wird, wobei aufgrund der Reflexionsunterschiede an der Grenzfläche zwischen Luft und Glas einerseits bzw. Flüssigkeit und Glas andererseits ein optisches Signal gewonnen wird, welches beim Eintauchen in die Flüssigkeit eine sprunghafte Änderung erfährt.

Aus der US 6,328,934 B1 ist eine Vorrichtung zur Detektion einer Flüssigkeitsoberfläche bekannt, bei welcher die in die Flüssigkeit eintauchende, elektrisch leitfähige Nadel eine elektrische Abschirmung aufweist. Zwei Spannungsquellen versorgen die Nadel und die elektrische Abschirmung mit unterschiedlichen Wechselspannungen. Mit Hilfe einer elektronischen Auswertevorrichtung wird der kapazitive und der resistive Anteil des Messsignales gemessen, welcher sich beim Eintauchen in die Flüssigkeit in charakteristischer Weise ändert.

Aus der EP 0 990 907 A1 ist eine Vorrichtung zur Positionierung einer Pipettiernadel bekannt, bei welcher zwischen einer elektrisch leitenden Bodenplatte und der Nadel ein Hochfrequenzfeld angelegt ist. Ein entsprechender Sensor detektiert die Admittanz bzw. die Impetanz des zwischen Nadel und Bodenplatte angelegten elektrischen Feldes und gibt die der Nadel zugeordnete Kapazität und den Leitwert als Messwert an eine Logikeinheit weiter.

Weiters sind unterschiedliche elektronische Messverfahren bekannt, bei welchen eine elektrisch leitende Sonde bzw. eine elektrisch leitende Pipettiernadel verwendet wird, welche Teil eines Schaltkreises ist. Beispielsweise kann der elektrische Widerstand bzw. die elektrische Leitfähigkeit in einem die Flüssigkeit kontaktierenden Schaltkreis gemessen werden, wobei sich der gemessene elektrische Leitwert bzw. Widerstandswert sprunghaft ändert, sobald die Sonde in die Flüssigkeit eintaucht. Als Nachteil bei derartigen Schaltungen ist anzuführen, dass das Gefäß für die Flüssigkeit elektrisch leitfähig sein muss und somit Glas- bzw. Kunststoffbehälter, die vor allem in der Medizin bzw. Labortechnik eingesetzt werden, nicht geeignet sind. Weiters sind derartige Systeme anfällig für Fehlströme und gerätebedingte Spannungsunterschiede, wie beispielsweise statische Aufladungen etc.

In diesem Zusammenhang ist aus der JP 63-259420 eine elektronische Schaltung bekannt geworden, bei welcher eine Brückenschaltung verwendet wird, welche einerseits mit einer elektrisch leitenden Sonde und andererseits mit einem Oszillator-Schwingkreis in Verbindung steht. In Abhängigkeit der Lage der elektrisch leitenden Sonde wird eine Phasendifferenz zum Eingangssignal festgestellt und durch eine Rückkoppelungsschaltung mittels einer Phasenabgleichung eine automatische Nullpunkt-Kalibrierung des Ausgangssignals erreicht. Das ist erforderlich, da die verwendete Brückenschaltung erst in der Nähe des Nullpunktes phasenempfindlich wird.

Aufgabe der vorliegenden Erfindung ist es, eine Vorrichtung bzw. ein Verfahren zur Detekion einer Flüssigkeitsoberfläche mit einer in die Flüssigkeit eintauchenden, elektrisch leitenden Sonde vorzuschlagen, welche eine rasch ansprechende, störungsfreie Messung garantiert, wobei das Gefäß zur Aufnahme der Flüssigkeit auch aus elektrisch nicht leitendem Material bestehen kann.

Diese Aufgabe wird dadurch gelöst, dass der Frequenzgenerator an einen LC-Schwingkreis hoher Güte gekoppelt ist und eine erzwungene Schwingung im Schwingkreis anregt, dass die Sonde mit dem LC-Schwingkreis elektrisch leitend verbunden ist und zu deren Bewegung in Richtung Flüssigkeitsoberfläche eine Antriebseinheit aufweist, dass zur Feststellung der Phasendifferenz zwischen dem LC-Schwingkreis und dem Frequenzgenerator ein Phasendiskriminator vorgesehen ist, welcher ein von der Phasendifferenz abhängiges Spannungssignal erzeugt, das beim Eintauchen der elektrisch leitenden Sonde in die Flüssigkeit eine sprunghafte Spannungsänderung erfährt.

Das erfindungsgemäße Verfahren sieht somit vor, dass das Frequenzsignal in einen LC-Schwingkreis hoher Güte eingekoppelt wird, sodass eine erzwungene Schwingung im LC-Schwingkreis anregt wird, dass die Sonde mit dem LC-Schwingkreis elektrisch leitend verbunden ist und in Richtung Flüssigkeitsoberfläche bewegt wird, dass eine Phasendifferenz zwischen dem Signal des LC-Schwingkreises und dem Frequenzsignal gemessen und ein von der Phasendifferenz abhängiges Spannungssignal erzeugt wird, das beim Eintauchen der elektrisch leitenden Sonde in die Flüssigkeit eine sprunghafte Änderung erfährt.

Der Vorteil gegenüber der eingangs zitierten US 6,328 934 B1 besteht somit darin, dass bei der Erfindung keine Abschirmung notwendig ist, wobei auch keine elektrisch leitende Bodenplatte (siehe EP 0 990 907 A1) benötigt wird. Ein weiterer wesentlicher Unterschied besteht in der Verwendung eines LC-Schwingkreises als phasensensitives Sensorelement unter Ausnützung der Tatsache, dass sich die Phase des zur erzwungenen Schwingung angeregten LC-Kreises bei Änderung bereits eines Parameters (Kapazität, Widerstand) weitaus stärker ändert als der Parameter selbst. Eine weitere Verbesserung dieses Ansprechverhaltens ergibt sich aus der Verwendung eines Phasendiskriminators.

Nachfolgend wird die Methode zur Erkennung der Flüssigkeitsoberfläche und der daraus abgeleiteten Positionierung einer Pipettiernadel als Beispiel in einem sogenannten "Liquid-Handling-System", wie es in der Medizintechnik häufig eingesetzt wird, vorgestellt.

Grundlage des hier beschrieben Verfahrens sind die unterschiedlichen elektrischen Parameter Leitfähigkeit und Dielektrizitätskonstante von Luft (oder auch Gas bzw. Dampf) und Flüssigkeit. Beim Eintauchen einer elektrisch leitfähigen Sonde in eine Flüssigkeit beeinflussen die oben angeführten Parameter das Resonanzverhalten eines Schwingkreises, von dem das Phasensignal zur Erkennung der Flüssigkeitsoberfläche verwendet wird. Mit dem Kontakt von Sonde und Flüssigkeit ändert sich der Blindwiderstand (der kapazitive Anteil nimmt zu) und die Resonanzfrequenz des Schwingkreises sinkt. Wenn die Resonanzfrequenz sinkt, erhöht sich die Phasendifferenz zum Eingangssignal.

Es ist erfindungsgemäß von Vorteil, wenn eingangsseitig des Phasendiskriminators Signalverstärker vorgesehen sind, welche sowohl das Signal des Frequenzgenerators als auch das Signal des LC-Schwingkreises bis zur Begrenzung verstärken, wobei die Einkoppelung des Signals des Frequenzgenerators in den LC-Schwingkreis bevorzugt hochohmig erfolgt.

Für die Positionierung der Sonde und deren Eintauchen in die Flüssigkeit bis zu einer vorgegebenen Tiefe, ist erfindungsgemäß der Ausgang des Phasendiskriminators mit einem A/D-Wandler verbunden, wobei dessen Ausgang eingangsseitig mit einem Mikroprozessor verbunden ist, welcher über eine Treibereinheit die Antriebseinheit der Sonde ansteuert.

Die Erfindung wird im Folgenden anhand von Zeichnungen näher erläutert. Es zeigen:

Fig. 1 ein Blockschaltbild der erfindungsgemäßen Vorrichtung, sowie

Fig. 2 ein Diagramm des Resonanzverhaltens des LC-Schwingkreises der Schaltung gemäß Fig. 1

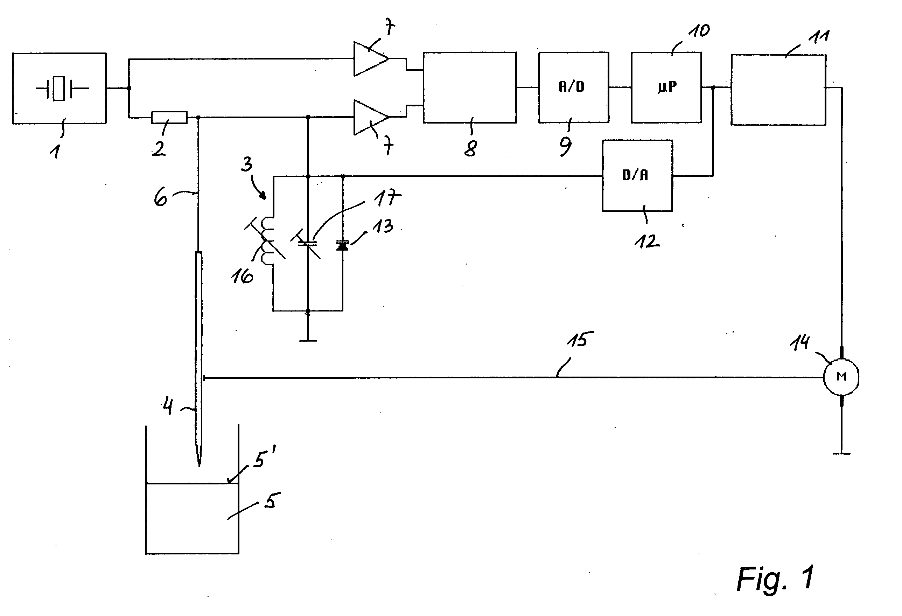

Gemäß Fig. 1 regt ein HF-Generator 1 mit einer Leistung von wenigen µWatt über eine hochohmige Ankopplung 2 einen LC-Schwingkreis 3 zu einer erzwungenen Schwingung an. Die hochohmige Ankopplung 2 ist von Vorteil, um die elektrische Güte des Schwingkreises 3 zu nicht zu beeinträchtigen. Eine ausreichende Frequenzkonstanz des Generatorsignals sollte zumindest für die Messdauer gegeben sein, in einer bevorzugten Ausführung kann zweckmäßigerweise einen quarzstabilisierten HF-Generator 1 eingesetzt werden.

Mit dem Schwingkreis 3 ist eine Sonde 4 (z.B. eine Pipettiernadel) galvanisch verbunden, welche über eine elektro-mechanische Antriebseinheit 14, 15 angetrieben, durch die Flüssigkeitsoberfläche 5' in die Flüssigkeit 5 eintauchen kann. Die Verbindung der Sonde mit dem Schwingkreis wird über ein flexibles Abschirmkabel 6 hergestellt.

Erfindungsgemäß weist der LC-Schwingkreis 3 zur Abgleichung auf die Frequenz des Frequenzgenerators 1 eine variable Induktivität 16 und/oder eine variable Kapazität 17, vorzugsweise eine Kapazitätsdiode 13, auf. Der Schwingkreis 1 wird zu Beginn durch eine variable Reaktanz (Abgleichspule, variabler Kondensator oder Kapazitätsdiode) so abgeglichen, dass die Resonanzfrequenz des LC-Schwingkreises etwa der Generatorfrequenz entspricht. Die Sonde 4 darf bei diesem Abgleich die Flüssigkeit 5 nicht berühren!

Der Abgleich ist im Prinzip nur einmal durchzuführen und bedarf nur der Wiederholung, wenn sich die Werte des LC-Schwingkreises geändert haben. Alterung, Austausch von Teilen oder Temperaturdrift könnte der Grund für diese Änderung sein.

Beim Eintauchen der Sonde 4 in die Flüssigkeit 5 bzw. beim Berühren der Flüssigkeitsoberfläche 5' ändern sich, wie oben beschrieben, die Parameter Leitfähigkeit und Dielektrizitätskonstante sprungartig. Dies bewirkt eine sprungartige Veränderung der Resonanzfrequenz des Schwingkreises 3 und damit auch eine sprungartige Veränderung von Amplitude und Phase der Wechselspannung am LC-Schwingkreis 3 relativ zur Wechselspannung des HF-Generators 1.

Die Abhängigkeit von Amplitude und Phase φ von der Verstimmung des Schwingkreises ersieht man aus dem Diagramm gemäß Fig. 1, wobei auf der Abszisse die normierte Frequenz $\Omega$ und auf der Ordinate die relative Amplitude bzw. die Phase aufgetragen ist.

Die Phase φ ist von der Frequenz und der Dämpfung wie folgt abhängig:

$$\varphi = \text{const}\, .\, \arctan\,(\Lambda\, .\, (\Omega\text{-}1/\Omega)),$$

wobei $\Omega$ die normierte Kreisfrequenz der erzwungenen Schwingung und $\Lambda$ ein Dämpfungsglied des Schwingkreises ist.

Die Phasenkurve ändert sich unmittelbar bei der Resonanzfrequenz (Amplitudenmaximum) sehr steil von 0° auf 180°. Die Steilheit der Kurve hängt ausschließlich von der Güte des Schwingkreises ab. Deshalb ist ein möglichst hohes LC-Verhältnis (große Induktivität, kleine Kapazität), hohe Spulengüte und geringe Widerstandsbelastung (hochohmige Ankopplung des Generators und nachfolgender Verstärker) vorteilhaft für eine empfindliche Detektion der Flüssigkeitsoberfläche.

Die Phase ist eine eindeutige, monoton steigende Funktion der normierten Frequenz (= Generatorfrequenz/Resonanzfrequenz), durch diese Eigenschaft lässt sich auf elegante und einfache Art ein automatischer Schwingkreisabgleich realisieren.

Um störende Einflüsse von Amplitudenänderungen auszuschalten, werden eingangsseitig des Phasendiskriminators 8 Signalverstärker 7 vorgeschaltet, welche sowohl das Signal des Frequenzgenerators 1 als auch das Signal des LC-Schwingkreises 3 bis zur Begrenzung verstärken.

Als Phasendiskriminator 8 können lineare und digitale Schaltungen verwendet werden z.B:

     Digitale Frequenz- und Phasendiskriminatoren
     Sample- and Hold-Phasendiskriminatoren
     Analoge Phasendiskriminatoren

Bevorzugt kann ein Analogmultiplizierer für diese Aufgabe eingesetzt werden Für den analogen Multiplizierer gilt: das Ergebnis der Multiplikation zweier gleicher Frequenzen ist (nach dem trivialen Ausfiltern einer Signalkomponente mit der doppelten Eingangsfrequenz) ein Signal, das nur mehr von der Phasendifferenz der Eingangssignale abhängig ist.
Wenn $u_1(t) = U_1 \sin\omega t$ und
     $u_2(t) = U_2 \sin(\omega t + \varphi)$,
dann ergibt $u_1(t)u_2(t) = U_1 U_2 \, [\cos(\omega t + \varphi - \omega t) - \cos(\omega t + \varphi + \omega t)]$,
die Ausgangsspannung $u_d$ des Diskriminators besteht aus einer Gleich- und einer Wechselspannungskomponente:
$u_d = k u_1(t)u_2(t) = kU_1 U_2[\cos\varphi - \cos(2\omega t + \varphi)]$
(k ist der Verstärkungsfaktor des Multiplizierers).
die Wechselspannungskomponente $\cos(2\omega t + \varphi)$ wird mit einem Tiefpassfilter ausgefiltert, somit bleibt nur mehr ein phasenabhängiger Gleichspannungsanteil (proportional $\cos\varphi$) über, vorausgesetzt dass $U_1$ und $U_2$ konstant bleiben (was mit den Begrenzer-Verstärkern 7 garantiert wird).

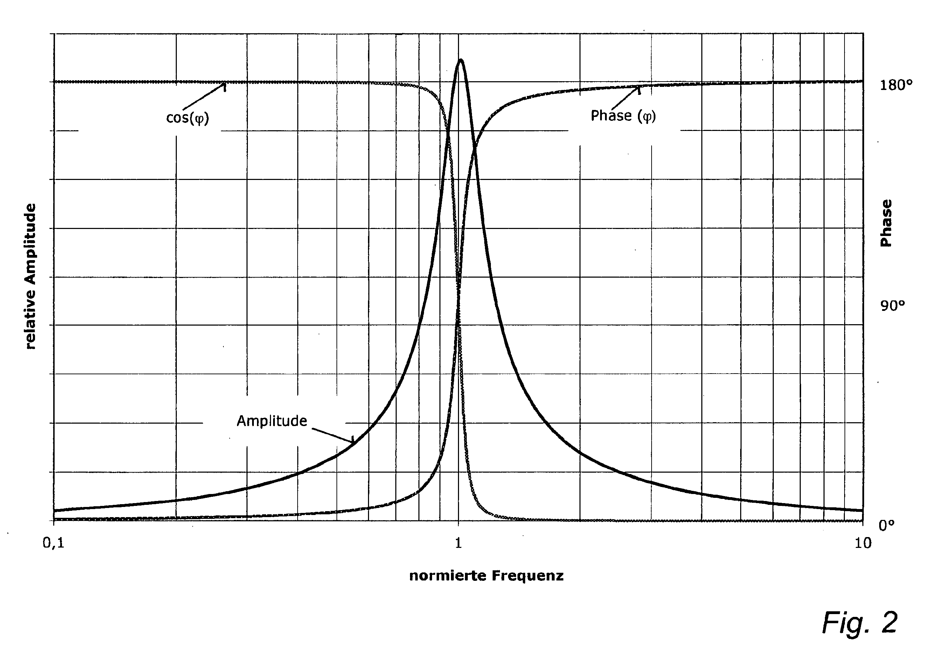

Wie man aus Fig. 2 ersehen kann, ist die $\cos\varphi$-Funktion, welche proportional $U_d$ ist, sogar steiler als die zugrunde liegende Phasenfunktion $\varphi$. Dies kommt wiederum der Empfindlichkeit der Detektion der Flüssigkeitsoberfläche zugute.

Die Gleichspannung kann nun unmittelbar als Signal zur Erkennung des Eintauchens der Sonde 4 verwendet werden. Berührt die Sonde 4 die Flüssigkeitsoberfläche 5', liefert der Phasendiskriminator 8 am Ausgang bereits bei sehr kleinen Flüssigkeitsmengen einen deutlichen Spannungssprung. Die Höhe des Spannungssprungs ist von der Dielektrizität der Flüssigkeit, der Flüssigkeitsmenge und der Eintauchtiefe der Sonde 4 abhängig.

Der Spannungssprung kann vielfältig verwertet werden:

Erfindungsgemäß kann die sprunghafte Änderung des Spannungssignals beim Eintauchen der elektrisch leitenden Sonde als Signal für Schaltvorgänge verwendet werden, beispielsweise für die mechanische Steuerung der Sonde und/oder zum Ein- und Ausschalten von Signalfiltern in der elektronischen Auswerteeinheit. Wird der Spannungssprung zum Beispiel einem A/D-Wandler 9 mit nachfolgendem Mikroprozessor 10 zugeführt, können durch Softwareroutinen auf einfache Weise Filter- und Zeitfensterfunktionen (beispielsweise zum Aus- und Einschalten des HF-Generators, zum Ausblenden von Störsignalen etc.) implementiert werden.

Weiters kann die Amplitude der sprunghaften Änderung des Spannungssignals beim Eintauchen der elektrisch leitenden Sonde bei bekannter elektrischen Leitfähigkeit und bekannter Dielektrizitätskonstante der Flüssigkeit als Maß zur Bestimmung bzw. groben Abschätzung der Flüssigkeitsmenge herangezogen werden.

Auch kann der oben beschriebene primäre Abgleich des Schwingkreises über einen D/A-Wandler 12 und eine Kapazitätsdiode 13 bei Bedarf automatisch vom Mikroprozessor 10 durchgeführt werden. Damit können Toleranzen, Alters- und Temperaturdriften der Bauteile, insbesondere der Bauteile des LC-Schwingkreises 3, ausgeglichen werden.

Durch Implementierung von Steuer- oder Regelalgorithmen und Ausgabe der Steuersignale auf eine Treibereinheit 11 kann die Bewegung der Sonde 4 mittels eines Stellmotors 14 und einer mechanischen Kopplung 15 kontrolliert werden.

Bei Verwendung von Sensoren zur Wegmessung kann man die Eintauchtiefe der Sonde 4 bzw. der Pipettiernadel genau steuern und kontrollieren, was wiederum für vielfältige Aufgaben beim Aufnehmen und Abgeben von Flüssigkeiten über die Pipettiernadel Voraussetzung ist.

**Patentansprüche**

**1.** Vorrichtung zur Detektion einer Flüssigkeitsoberfläche (5') mit einer in die Flüssigkeit (5) eintauchenden, elektrisch leitenden Sonde (4), vorzugsweise einer Pipettiernadel, wobei die Sonde (4) vom Signal eines Frequenzgenerators (1) beaufschlagt ist und mit einer elektronischen Auswerteeinheit in Kontakt steht, **dadurch gekennzeichnet, dass** der Frequenzgenerator (1) an einen LC-Schwingkreis (3) hoher Güte gekoppelt ist und eine erzwungene Schwingung im Schwingkreis anregt, dass die Sonde (4) mit dem LC-Schwingkreis (3) elektrisch leitend verbunden ist und zu deren Bewegung in Richtung Flüssigkeitsoberfläche (5') eine Antriebseinheit (14, 15) aufweist, dass zur Feststellung der Phasendifferenz zwischen dem LC-Schwingkreis (3) und dem Frequenzgenerator (1) ein Phasendiskriminator (8) vorgesehen ist, welcher ein von der Phasendifferenz abhängiges Spannungssignal erzeugt, das beim Eintauchen der elektrisch leitenden Sonde (4) in die Flüssigkeit (5) eine sprunghafte Änderung erfährt.

2. Vorrichtung nach Anspruch 1, **dadurch gekennzeichnet, dass** eingangsseitig des Phasendiskriminators (8) Signalverstärker (7) vorgesehen sind, welche sowohl das Signal des Frequenzgenerators (1) als auch das Signal des LC-Schwingkreises (3) bis zur Begrenzung verstärken.

3. Vorrichtung nach Anspruch 1 oder 2, **dadurch gekennzeichnet, dass** die Einkoppelung des Signals des Frequenzgenerators (1) in den LC-Schwingkreis (3) hochohmig erfolgt.

4. Vorrichtung nach einem der Ansprüche 1 bis 3, **dadurch gekennzeichnet, dass** der Ausgang des Phasendiskriminators (8) mit einem A/D-Wandler (9) verbunden ist und dessen Ausgang eingangsseitig mit einem Mikroprozessor (10) verbunden ist, welcher über eine Treibereinheit (11) die Antriebseinheit (14, 15) der Sonde (4) ansteuert.

5. Vorrichtung nach einem der Ansprüche 1 bis 4, **dadurch gekennzeichnet, dass** der LC-Schwingkreis (3) zur Abgleichung auf die Frequenz des Frequenzgenerators (1) eine variable Induktivität (16) und/oder eine variable Kapazität (17), vorzugsweise eine Kapazitätsdiode (13), aufweist.

6. Vorrichtung nach Anspruch 5, **dadurch gekennzeichnet, dass** die Kapazitätsdiode (13) über eine Rückkoppelung zum Ausgang des Mikroprozessors (10) automatisch abgleichbar ist.

7. Vorrichtung nach einem der Ansprüche 1 bis 6, **dadurch gekennzeichnet, dass** als Phasendiskriminator (8) ein Sample-and-Hold-Phasendiskriminator, ein digitaler oder ein analoger Phasendiskriminator, vorzugsweise ein Analog-Multiplizierer eingesetzt ist.

8. Verfahren zur Detektion einer Flüssigkeitsoberfläche, wobei in die Flüssigkeit eine elektrisch leitende Sonde, vorzugsweise eine Pipettiernadel, eingetaucht wird, die mit einer elektronischen Auswerteeinheit in Kontakt steht und mit einem Frequenzsignal beaufschlagt wird, **dadurch gekennzeichnet, dass** das Frequenzsignal in einen LC-Schwingkreis hoher Güte eingekoppelt wird, sodass eine erzwungene Schwingung im LC-Schwingkreis anregt wird, dass die Sonde mit dem LC-Schwingkreis elektrisch leitend verbunden ist und in Richtung Flüssigkeitsoberfläche bewegt wird, dass eine Phasendifferenz zwischen dem Signal des LC-Schwingkreises und dem Frequenzsignal gemessen und ein von der Phasendifferenz abhängiges Spannungssignal erzeugt wird, das beim Eintauchen der elektrisch leitenden Sonde in die Flüssigkeit eine sprunghafte Änderung erfährt.

9. Verfahren nach Anspruch 8, **dadurch gekennzeichnet, dass** die sprunghafte Änderung des Spannungssignals beim Eintauchen der elektrisch leitenden Sonde als Signal für Schaltvorgänge verwendet wird, beispielsweise für die mechanische Steuerung der Sonde und/oder zum Ein- und Ausschalten von Signalfiltern in der elektronischen Auswerteeinheit.

10. Verfahren nach Anspruch 8 oder 9, **dadurch gekennzeichnet, dass** die Amplitude der sprunghaften Änderung des Spannungssignals beim Eintauchen der elektrisch leitenden Sonde bei bekannter elektrischen Leitfähigkeit und bekannter Dielektrizitätskonstante der Flüssigkeit als Maß zur Bestimmung der Flüssigkeitsmenge herangezogen wird.

Fig. 1

Fig. 2

EP 1 422 502 A1

| Europäisches Patentamt | EUROPÄISCHER RECHERCHENBERICHT | Nummer der Anmeldung<br>EP 03 02 6437 |
| --- | --- | --- |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| --- | --- | --- | --- |
| X | US 5 265 482 A (DAVIS JAMES E  ET AL) 30. November 1993 (1993-11-30) * Spalte 4, Zeile 25 – Spalte 5, Zeile 49; Abbildung 1 * | 1,8,9 | G01F23/24 G01F23/26 |
| D,Y | US 6 328 934 B1 (KIVINEEME JUHAN  ET AL) 11. Dezember 2001 (2001-12-11) * Spalte 3, Zeile 1 – Spalte 4, Zeile 57; Abbildungen 1,2 * | 1,8 | |
| Y | DE 44 12 386 A (GRIESHABER VEGA KG) 12. Oktober 1995 (1995-10-12) * Spalte 6, Zeile 19 – Spalte 7, Zeile 38; Abbildung * | 1,8 | |
| D,Y | EP 0 990 907 A (HOFFMANN LA ROCHE) 5. April 2000 (2000-04-05) * Spalte 2, Zeile 35 – Spalte 5, Zeile 41; Abbildungen 1,2 * | 1,8 | |
| Y | US 5 223 819 A (MARSH NORMAN F  ET AL) 29. Juni 1993 (1993-06-29) * Spalte 3, Zeile 4 – Zeile 66; Abbildung 1 * | 1,8 | RECHERCHIERTE SACHGEBIETE (Int.Cl.7)<br><br>G01F |
| A | US 6 254 212 B1 (TRUFFAUT CHRISTOPHE  ET AL) 3. Juli 2001 (2001-07-03) * Spalte 9, Zeile 45 – Spalte 10, Zeile 27; Abbildung 6 * | 2,4 | |

Der vorliegende Recherchenbericht wurde für alle Patentansprüche erstellt

| Recherchenort | Abschlußdatum der Recherche | Prüfer |
| --- | --- | --- |
| Den Haag | 23. Maerz 2004 | Heinsius, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie,übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 03 02 6437

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 5265482 | A | 30-11-1993 | KEINE | | |
| US 6328934 | B1 | 11-12-2001 | EP | 0927339 A1 | 07-07-1999 |
| | | | JP | 2001500620 T | 16-01-2001 |
| | | | WO | 9812513 A1 | 26-03-1998 |
| DE 4412386 | A | 12-10-1995 | DE | 4412386 A1 | 12-10-1995 |
| EP 0990907 | A | 05-04-2000 | EP | 0990907 A1 | 05-04-2000 |
| | | | WO | 0019211 A1 | 06-04-2000 |
| US 5223819 | A | 29-06-1993 | US | 5048335 A | 17-09-1991 |
| | | | AU | 2003288 A | 06-04-1989 |
| | | | CA | 1297156 C | 10-03-1992 |
| | | | DE | 3862734 D1 | 13-06-1991 |
| | | | EP | 0310761 A1 | 12-04-1989 |
| | | | IN | 171090 A1 | 18-07-1992 |
| | | | KR | 9600100 B1 | 03-01-1996 |
| | | | AU | 638882 B2 | 08-07-1993 |
| | | | AU | 8968691 A | 16-07-1992 |
| | | | CA | 2057556 A1 | 10-07-1992 |
| | | | DE | 69110442 D1 | 20-07-1995 |
| | | | DE | 69110442 T2 | 12-10-1995 |
| | | | EP | 0494398 A2 | 15-07-1992 |
| | | | JP | 4315921 A | 06-11-1992 |
| | | | KR | 196450 B1 | 15-06-1999 |
| US 6254212 | B1 | 03-07-2001 | FR | 2743750 A1 | 25-07-1997 |
| | | | EP | 0873243 A1 | 28-10-1998 |
| | | | JP | 11502791 T | 09-03-1999 |
| | | | CN | 1177946 A ,B | 01-04-1998 |
| | | | WO | 9727061 A1 | 31-07-1997 |
| | | | TW | 381170 B | 01-02-2000 |

EPO FORM P0461

Für nähere Einzelheiten zu diesem Anhang : siehe Amtsblatt des Europäischen Patentamts, Nr. 12/82